# EUROPÄISCHE PATENTSCHRIFT

(11) **EP 1 759 985 B1**
(45) Veröffentlichungstag und Bekanntmachung des Hinweises auf die Patenterteilung: **23.09.2009**
(21) Anmeldenummer: 06017957.9
(22) Anmeldetag: 29.08.2006
(51) Int. Cl.: B63H 20/32, B63H 21/17

(54) **Zusammenlegbarer Aussenbordmotor**
Collapsible outboard engine
Moteur hors bord repliable

(30) Priorität: 30.08.2005 EP 05018833
(43) Veröffentlichungstag der Anmeldung: 07.03.2007
(73) Patentinhaber: Torqeedo GmbH, 82319 Starnberg (DE)
(72) Erfinder: Kraft, Klaus, 89134 Blaustein (DE); Walk, Heinrich, 89604 Allmendingen (DE); Böbel, Friedrich, Dr., 82547 Eurasburg (DE)
(74) Vertreter: Gellner, Bernd

(56) Entgegenhaltungen:
- EP-A- 1 215 115
- DE-U1- 29 920 390
- US-A- 3 624 738
- US-A- 4 838 817
- US-B1- 6 213 821
- US-B1- 6 802 749
- PATENT ABSTRACTS OF JAPAN Bd. 1997, Nr. 05, 30. Mai 1997 (1997-05-30) -& JP 09 020291 A (YAMAHA MOTOR CO LTD), 21. Januar 1997 (1997-01-21)

## Beschreibung

Die Erfindung betrifft einen transportierbaren Außenbordmotor mit einem Oberteil, einem Unterwasserteil, einem das Oberteil und das Unterwasserteil verbindenden, aus mindestens zwei Schaftteilen bestehenden Schaft, einem Elektromotor und einem elektrischen Kabel, welches im Inneren des Schaftes verläuft, wobei der Außenbordmotor in eine Betriebskonfiguration und in eine Transportkonfiguration bringbar ist, wobei in der Betriebskonfiguration das Oberteil, der Schaft und das Unterwasserteil fest miteinander verbunden sind, und wobei die relative Lage des elektrischen Kabels zu dem Schaft in der Betriebskonfiguration und in der Transportkonfiguration unterschiedlich ist.

Übliche Außenbord-Verbrennungsmotoren besitzen ein Oberteil, welches als Gehäuse ausgeführt ist und in dem der Motor untergebracht ist, sowie ein Unterwasserteil, welches einen Propeller aufweist und einen das Oberteil und das Unterwasserteil verbindenden Schaft mit einer Welle, um die Kraft von dem Motor auf den Propeller zu übertragen.

Demgegenüber sind Elektro-Außenbordmotoren häufig so aufgebaut, dass das Unterwasserteil neben dem Propeller auch den Elektromotor umfasst. Das Oberteil kann mit einem Gehäuse zur Aufnahme der Batterien versehen sein oder lediglich als Steuerpinne dienen. In letzterem Fall sind die Batterien an geeigneter Stelle im Boot untergebracht. Durch den das Oberteil und das Unterwasserteil verbindenden Schaft werden bei einem Elektromotor üblicherweise elektrische Leitungen geführt.

Kleinere Boote mit Außenbordmotoren werden häufig mit Kraftfahrzeugen an den gewünschten Einsatzort, beispielsweise einen See, gebracht, aufgebaut und zu Wasser gelassen.

Durch die gezwungenermaßen längliche Ausführung des Schaftes sind Außenbordmotoren beim Transport sehr unhandlich. Wünschenswert wäre es, wenn der Außenbordmotor für Transportzwecke auf ein kleines und kompaktes Maß gebracht werden könnte.

In der US 1,790,856 wird hierzu vorgeschlagen, den Schaft eines Außenbord-Verbrennungsmotors mit einem Gelenk zu versehen, so dass das Unterwasserteil mit dem unteren Schaftteil zum Transport nach oben geklappt werden kann. Die in dem Schaft laufende Welle besteht ebenfalls aus zwei Teilen, die in Betriebskonfiguration des Schaftes formschlüssig ineinander greifen, so dass die vom Motor erzeugte Kraft über die Welle auf den Propeller übertragen werden kann.

Der in der US 1,790,856 offenbarte Faltmechanismus ist jedoch nicht ohne weiteres auf elektrische Außenbordmotoren übertragbar. Die eingesetzten Elektromotoren werden häufig mit hohen Strömen von bis zu 150 A betrieben, wodurch elektrische Leitungen mit einem Querschnitt von beispielsweise 15 mm² nötig sind. Solch starke Leitungen mit 15 mm² Querschnitt besitzen aber einen relativ großen Biegeradius, so dass ein Falten des Schaftes, wie in der US 1,790,856 beschrieben, nicht oder nur schwer möglich ist. Dies gilt insbesondere dann, wenn der Durchmesser des Schaftes selbst nur unwesentlich größer als der Kabelquerschnitt ist, so dass die elektrische Leitung zum Zusammenklappen des Schaftes geknickt werden müsste.

In der US 6,213,821 B1, die als zum Gegenstand des unabhängigen Anspruchs 1 nächstliegender Stand der Technik angesehen wird, ist ein Außenbordmotor mit einem Oberteil, einem Unterwasserteil und einem diese verbindenden Schaft beschrieben. Der Schaft besteht aus zwei Teilen und kann teleskopartig zusammengeschoben werden, wodurch der Außenbordmotor in eine Betriebs- und eine Transportkonfiguration gebracht werden kann. Ein elektrisches Steuerkabel verläuft innerhalb des Schaftes von dem Oberteil zu dem Unterwasserteil mit dem Elektromotor. Das Kabel wird innerhalb des Schaftes in einer Schleife über einen Umlenkmechanismus geführt. Beim Zusammenschieben bzw. Auseinanderziehen des Teleskopschaftes wird die Kabelschleife automatisch vergrößert bzw. verkleinert, so dass sich das Kabel im Schaft weder verklemmt noch aus den Kabelanschlüssen gezogen wird.

Für Hochstromanwendungen, bei denen Kabel mit großem Querschnitt und dadurch bedingtem relativ großem Biegeradius verwendet werden müssen, ist ein solcher Umlenkmechanismus jedoch nicht einsetzbar.

Aufgabe vorliegender Erfindung ist es daher, einen Außenbordmotor zu entwickeln, der zum Transport auf ein möglichst kompaktes Maß gebracht werden kann.

Diese Aufgabe wird durch einen Außenbordmotor der eingangs genannten Art gelöst, wobei die Schaftteile in der Transportkonfiguration voneinander getrennt sind.

Unter dem Begriff elektrisches Kabel beziehungsweise Kabel sollen hierbei alle Arten von den elektrischen Strom leitenden Elementen, insbesondere Kabel und Drähte, verstanden werden. Die Erfindung betrifft insbesondere Außenbordmotoren, bei denen das elektrische Kabel einen großen Querschnitt von mindestens 10 mm², vorzugsweise mindestens 20 mm², besonders bevorzugt mindestens 25 mm² besitzt.

Der erfindungsgemäße Außenbordmotor weist ein Oberteil, ein Unterwasserteil und einen Schaft auf. Die Schaftteile sind hohl ausgeführt und das Kabel verläuft im Inneren der Schaftteile von dem Oberteil zu dem Unterwasserteil. Der Außenbordmotor kann in eine Betriebskonfiguration und in eine Transportkonfiguration gebracht werden.

In der Betriebskonfiguration sind das Oberteil, der Schaft und das Unterwasserteil fest miteinander verbunden, so dass die von dem Unterwasserteil mit dem Propeller ausgeübte Kraft über den Schaft auf das Boot übertragen werden kann.

Beim Wechsel von der Betriebskonfiguration in die Transportkonfiguration kann zumindest ein Teil des Kabels relativ zu dem Schaft bewegt werden. Die relative Position eines Teils des Kabels zum Schaft wird also beim Übergang von der Betriebskonfiguration in die Transportkonfiguration geändert. Beispielsweise kann ein Schaftteil in der Transportkonfiguration so positioniert sein, dass ein Teil des Kabels nicht mehr entlang dieses Schaftteils verläuft.

Auf diese Weise kann der Außenbordmotor auf ein kleineres Volumen zusammengepackt werden, wobei das Kabel zumindest auf dem Teil seiner Länge, auf dem es relativ zum Schaft bewegbar ist, unter Berücksichtigung seiner Biegsamkeit aufgerollt oder anderweitig gepackt werden kann. Im Gegensatz zu der aus der US 1,790,856 bekannten Lösung können so der Schaft und das im oder entlang des Schaftes verlaufende Kabel zumindest teilweise unabhängig voneinander auf ein kleineres Volumen gebracht werden. Erfindungsgemäß sind in der Transportkonfiguration die Schaftteile voneinander getrennt. Durch das Innere der Schaftteile verläuft das Kabel, die Schaftteile selbst
sind jedoch relativ zueinander bewegbar. Auf diese Weise werden größere Biegeradien für das Kabel ermöglicht, als dies bei miteinander verbundenen Schaftteilen der Fall wäre. Bei einem Klappmechanismus, wie dem in der eingangs erwähnten US 1,790,856, hängt der Biegeradius für das Kabel unmittelbar von dem Querschnitt des Schaftes ab. Wird ein schmaler Schaft zusammengeklappt, so muss das in dessen Innerem verlaufende Kabel entsprechend stark gebogen werden. Erfindungsgemäß werden die Schaftteile dagegen in der Transportkonfiguration voneinander getrennt, so dass der Biegeradius für das Kabel nicht durch die Dimensionierung der Schaftteile und eines gegebenenfalls vorhandenen Faltmechanismus vorgegeben wird.

Vorzugsweise bleibt das Kabel beim Wechsel von der Betriebskonfiguration in die Transportkonfiguration sowohl mit dem Oberteil als auch mit dem Unterwasserteil fest verbunden.

In der Transportkonfiguration ist vorzugsweise zumindest ein Schaftteil relativ zu dem Kabel entlang der Längsachse des Schaftteils bewegbar. Das Kabel verläuft dabei im Inneren des Schaftteils, wobei das Schaftteil frei auf dem Kabel verschiebbar ist.

Der Außenbordmotor kann in eine besonders kompakte Anordnung gebracht werden, wenn alle Schaftteile relativ zu dem Kabel frei bewegbar sind. Die Schaftteile können dann beispielsweise gleichmäßig beabstandet über die Länge des Kabels verteilt werden oder auch alle an einem Kabelende positioniert werden, je nachdem weiche Anordnung in Anbetracht der Ausgestaltung der Schaftteile und der Ausführung des Kabels, insbesondere dessen Länge und Biegsamkeit, eine günstigere und kompaktere Transportkonfiguration erlaubt.

Von Vorteil sind die Schaftteile in der Betriebskonfiguration zusammengesteckt. In einer bevorzugten Ausführungsform weisen die Schaftteile hierzu jeweils Verbindungsmittel auf, die so ausgeführt sind, dass diese, vorzugsweise formschlüssig, ineinander greifen. Insoweit sind insbesondere Steckverbindungen verschiedenster Art einsetzbar. Die Schaftteile können beispielsweise auf ihren Stirnflächen mit Steckvorrichtungen versehen sein, so dass diese in Längsrichtung der Schaftteile zusammengesteckt werden können. Ein Sicherungselement oder Arretierungsmittel, wie zum Beispiel ein Sicherungsstift, ein Sicherungsbolzen oder eine Sicherungsschraube, gewährleisten, dass die Schaftteile im Betriebszustand fest verbunden bleiben.

Die Schaftteile können von Vorteil auch an ihren Stirnflächen mit Schwalbenschwanzähnlichen Führungen ausgestattet sein. Die Verbindung der Schaftteile erfolgt dann durch seitliches, das heißt quer zur Längsachse der Schaftteile gerichtetes, Schieben der Schaftteile ineinander.

Von Vorteil werden die Schaftteile durch einen bajonettartigen Verbindungsmechanismus miteinander verbunden, bei dem die Schaftteile zunächst zusammengesteckt und anschließend durch eine Drehbewegung um eine Achse parallel zu deren Längsachse arretiert werden.

Bei einer weiteren bevorzugten Ausführungsform werden die Schaftteile in der Betriebskonfiguration in- oder aufeinander gesteckt und mittels einer Zugvorrichtung zusammengehalten oder miteinander verspannt. Besonders bevorzugt werden die Schaftteile jeweils mit einem Einsatz versehen, wobei beim Zusammenstecken der Schaftteile einer der Einsätze in einem anderen Einsatz geführt wird. Vorzugsweise besitzt ein Einsatz einen Konus, der in ein entsprechendes Gegenstück im anderen Einsatz geschoben oder gesteckt wird. Es hat sich weiter als günstig erwiesen, die Schaftteile mit Führungsbolzen und entsprechenden Gegenstücken zu versehen, welche in der Betriebskonfiguration ineinander greifen.

Mit einer Zugvorrichtung, vorzugsweise einem Zugseil, insbesondere einem Stahlseil, werden die Schaftteile zusammengezogen, wodurch die Einsätze und/oder Schaftteile fest in- oder aufeinander gepresst werden. Das Zugseil kann beispielsweise am Unterwasserteil befestigt sein und durch das Innere der Schaftteile bis zum Oberteil geführt werden. Am Oberteil sind von Vorteil Mittel zum Fixieren des Zugseils, zum Beispiel eine Klemm- oder Schraubvorrichtung, vorgesehen. Zur Verbindung der Schaftteile wird das Zugseil gespannt und fixiert, so dass die Schaftteile zusammengepresst werden.

Anstelle der genannten Einsätze, die bevorzugt aus Kunststoff, insbesondere aus Spritzgussteilen gefertigt sind, ist es auch möglich, die Enden der Schaftteile entsprechend umzuformen, so dass jeweils zwei Schaftteile zumindest teilweise ineinander gesteckt werden können.

Weiter hat es sich als vorteilhaft erwiesen, die Schaftteile mit einem Gewinde zu versehen und ineinander zu schrauben. Ebenso ist es günstig, ein Schaftteil mit einem Bohrfutter auszurüsten, wie es von handelsüblichen Bohrmaschinen bekannt ist, und das andere Schaftteil mittels des Bohrfutters festzuklemmen.

Die Erfindung wird vorzugsweise bei einem Elektro-Außenbordmotor eingesetzt, dessen Schaft hohl ausgeführt ist und durch den ein elektrisches Kabel vom Oberteil zum Unterwasserteil geführt ist. Die Schaftteile sind für den Transport des Außenbordmotors voneinander trennbar, wie dies beispielsweise bei einem aus mehreren Schaftteilen zusammengesteckten Schaft der Fall ist. Nach dem Trennen der Schaftteile befinden sich mehrere kurze Schaftteile auf dem Kabel. Die Schaftteile können in der Transportkonfiguration entlang des elektrischen Kabels verschoben werden. Das elektrische Kabel kann dann zum Beispiel aufgerollt werden, wobei jeweils der Teil des Kabels der sich im Inneren eines Schaftteils befindet gerade verläuft und das Kabel zwischen zwei Schaftteilen gebogen werden kann. Der Biegeradius wird so gewählt, dass das Kabel nicht geknickt und beschädigt wird.

Die genannten Möglichkeiten, die Schaftteile untereinander zu verbinden, sind von Vorteil auch auf die Verbindung zwischen dem Oberteil und dem angrenzenden Schaftteil und auf die Verbindung zwischen dem Unterwasserteil und dem benachbarten Schaftteil übertragbar. Diese Verbindungen zwischen dem Oberteil und dem angrenzenden Schaftteil beziehungsweise zwischen dem Unterwasserteil und dem benachbarten Schaftteil sind bevorzugt lösbar ausgeführt, so dass der Schaft zum Transport auch vom Oberteil und / oder vom Unterwasserteil getrennt werden kann.

In der Transportkonfiguration sind nach dem Lösen aller Verbindungen zwischen dem Oberteil und dem Schaft, den Schaftteilen untereinander und zwischen dem Schaft und dem Unterwasserteil das Oberteil und das Unterwasserteil weiterhin von Vorteil über das elektrische Kabel miteinander verbunden. Die Schaftteile sind dabei frei auf dem Kabel beziehungsweise entlang des Kabels verschiebbar. Oberteil und Unterwasserteil können dann beispielsweise aufeinandergelegt werden und das Kabel mit den Schaftteilen wird um diese gewickelt. Auf diese Weise ist der erfindungsgemäße Außenbordmotor schnell und einfach auf ein kompaktes Packmaß reduzierbar.

Es kann auch Vorteile bringen, das elektrische Kabel über Steckverbindungen mit dem Oberteil und / oder dem Unterwasserteil zu verbinden. In diesem Fall können in der Transportkonfiguration Oberteil, Unterwasserteil, Schaftteile und Kabel gänzlich voneinander getrennt werden, wodurch sich je nach Ausführung des Motors das Packmaß weiter verringern lässt. Andererseits ist bei dieser Ausführungsform darauf zu achten, dass die Steckverbindungen beim Zusammenbau des Außenbordmotors immer eine gute elektrische Verbindung gewährleisten. Die Steckverbindungen sind daher zum Beispiel beim Transport vor Verunreinigungen zu schützen. Diese Gefahr wird bei der oben erläuterten Ausführung, bei der Oberteil und Unterwasserteil stets über das Kabel verbunden bleiben, ausgeschlossen.

Bevorzugt besteht der Schaft aus mindestens drei Schaftteilen, besonders bevorzugt aus höchstens fünf Schaftteilen. Hinsichtlich der Anzahl der Schaftteile ist zu beachten, dass mit steigender Zahl der Schaftteile das Transportmaß zwar verringert werden kann, dass aber je nach Ausführung die Stabilität des Schaftes abnehmen kann. Insoweit haben sich drei bis fünf Schaftteile als guter Kompromiss zwischen den Stabilitätsanforderungen und der gewünschten Kompaktheit erwiesen. In der Praxis hat sich gezeigt, dass hinsichtlich der Stabilität die oben beschriebene Ausführungsform mit gesteckten Schaftteilen, die über ein Zugseil zusammengezogen werden, besondere Vorteile bringt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: schematisch einen Elektro-Außenbordmotor für ein Boot,
- Figur 2: eine vergrößerte Darstellung des Details A,
- Figur 3: eine alternative Ausführung des Details A,
- Figur 4: eine weitere Ausgestaltung des Details A,
- Figur 5: eine weitere Ausgestaltung des Details A,
- Figur 6: die Draufsicht auf einen erfindungsgemäß gepackten Außenbordmotor,
- Figur 7: einen erfindungsgemäßen Außenbordmotor in der Betriebskonfiguration und
- Figur 8: denselben Motor in der Transportkonfiguration.

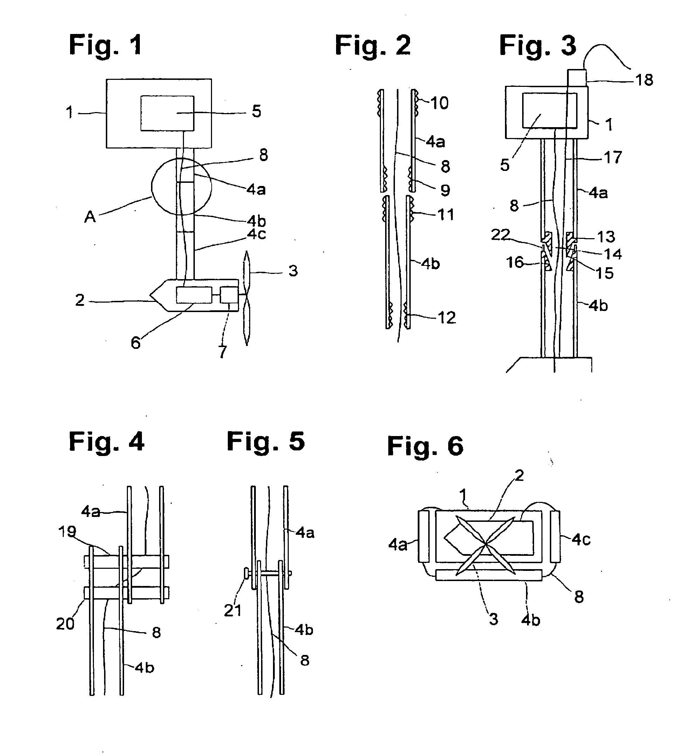

Der in Figur 1 dargestellte Außenbordmotor besteht im Wesentlichen aus einem Oberteil 1, einem Unterwasserteil 2, welches mit einem Propeller 3 versehen ist, und einem Schaft 4, der das Oberteil 1 mit dem Unterwasserteil 2 verbindet. Der gezeigte Bootsantrieb ist als Elektromotor ausgeführt. Das Oberteil 1 beinhaltet einen Batteriesatz 5 als Stromversorgung. Der eigentliche Elektromotor 6 befindet sich im Unterwasserteil 2 und treibt den Propeller 3 über eine nicht dargestellte Welle an. Gegebenenfalls ist ein Getriebe 7 dem Elektromotor 6 nachgeschaltet, um die Drehzahl des Elektromotors 6 zu reduzieren. Der Elektromotor 6 ist an den Batteriesatz 5 mittels eines elektrisch leitenden Kabels 8 angeschlossen, welches im Inneren des Schaftes 4 verläuft. Um die beim Betrieb des Elektromotors 6 hohen Strömen leiten zu können, wird ein elektrisches Kabel 8 mit einem Querschnitt von mindetsens 10 mm², vorzugsweise mit 25 mm² Querschnitt, eingesetzt.

Der erfindungsgemäße Elektro-Außenbordmotor ist für den Transport auf ein handliches Maß zusammenpackbar. Hierzu ist der Schaft 4 in drei Schaftteile 4a, 4b, 4c geteilt, welche für den Transport auseinander genommen werden können. Im betriebsfertigen Zustand des Außenbordmotors sind die Schaftteile 4a, 4b, 4c dagegen fest miteinander verbunden.

Die Figuren 2 bis 5 zeigen verschiedene bevorzugte Ausgestaltungen der Verbindung der Schaftteile 4a, 4b, 4c.

So sind gemäß Figur 2 die Schaftteile 4a, 4b, 4c miteinander verschraubt. Das Schaftteil 4a ist als Rohr ausgeführt, weiches an einem Ende ein Innengewinde 9 und am anderen Ende ein Außengewinde 10 besitzt. Die Schaftteile 4b, 4c sind analog ausgeführt.

In der Betriebskonfiguration, das heißt im betriebsbereiten Aufbau des Außenbordmotors, sind alle Teile 1, 4a, 4b, 4c, 2 miteinander verschraubt. Die Schraubverbindungen 9, 11 der beiden Schaftteile 4a, 4b erlauben ein stufenloses Verstellen der Schaftlänge. Alle Schraubverbindungen 9, 10, 11, 12 sind einfach zu handhaben und gewährleisten eine feste und sichere Verbindung des Oberteils 1 mit dem Schaftteil 4a, der Schaftteile 4a, 4b, 4c untereinander und des Schaftteils 4c mit dem Unterwasserteil 2. Das elektrische Kabel 8 wird im Inneren der Schaftteile 4a, 4b, 4c geführt.

Für den Transport werden alle Schraubverbindungen 9, 10, 11, 12 gelöst. Die Schaftteile 4a, 4b, 4c sind dann in der Transportkonfiguration frei auf dem Kabel 8 verschiebbar. Das Elektrokabel 8 mit den Schaftteilen 4a, 4b, 4c wird um den Umfang des Oberteils 1 gelegt, wie in Figur 6 schematisch dargestellt. Das Unterwasserteil 2 und der Propeller 3 werden auf dem Oberteil 1 angeordnet, wobei in der gezeigten Ausführung der Propeller 3 vom Unterwasserteil 2 abgenommen wurde. Es ist aber ebenso möglich, Propeller 3 und Unterwasserteil 2 als eine Einheit zu belassen. Der Außenbordmotor wird so auf ein handliches Maß gepackt und kann beispielsweise in einer geeigneten Tasche oder einem Rucksack transportiert werden.

In den Figuren 3 bis 5 sind alternative Ausführungen zum Verbinden zweier Schaftteile 4a, 4b gezeigt. Aus Gründen der Übersichtlichkeit sind jeweils nur zwei Schaftteile 4a, 4b dargestellt. Selbstverständlich sind die beschriebenen Verbindungsmöglichkeiten auch auf mehrere Schaftteile übertragbar.

In der Ausführung nach Figur 3 ist das obere rohrförmige Schaftteil 4a mit einem Kunststoffeinsatz 13 versehen, der eine zentrale Bohrung 14 und ein konisch zulaufendes Ende 15 aufweist. Am unteren Schaftteil 4b ist ein entsprechendes Gegenstück 16 aus Kunststoff angebracht. Die Verbindungen des Schaftteils 4a mit dem Oberteil 1 und des Schaftteils 4b mit dem Unterwasserteil 2 sind vorzugsweise in analoger Weise ausgeführt und ebenfalls mit ineinander greifenden Kunststoffeinsätzen versehen. Vorzugsweise sind an einem der Schaftteile 4b noch Führungsstifte 22 vorgesehen, die in entsprechende Aussparungen des anderen Schaftteiles 4a greifen.

Zum Transport können alle Teile 1, 4a, 4b, 2 auseinandergezogen, getrennt und beispielsweise analog zu Figur 6 gepackt werden.

Für den Einsatz, das heißt in der Betriebskonfiguration, werden die Teile 1, 4a, 4b, 2 zusammengesteckt. Ein Zugseil 17 ist fest mit dem Unterwassserteil 2 verbunden und verläuft zusammen mit dem Kabel 8 durch das Innere der Schaftteile 4a, 4b. Am Oberteil 1 ist eine Klemmvorrichtung 18 angebracht, in der das Zugseil 17 arretiert werden kann. Durch Zug am Zugseil 17 können so alle Teile 1, 4a, 4b, 2 fest miteinander verbunden werden.

In Figur 4 ist eine weitere Verbindungsmöglichkeit dargestellt. Die beiden Schaftteile 4a, 4b sind in diesem Fall parallel versetzt zueinander angeordnet. Verbindungselemente 19, 20 halten die beiden Schaftteile 4a, 4b zusammen. Die elektrische Leitung 8 verläuft im Inneren der beiden rohrförmigen Schaftteile 4a, 4b. Im Bereich der Verbindungsstelle sind die beiden Schaftteile 4a, 4b jeweils mit einem in der Zeichnung nicht dargestellten Schlitz versehen, durch den das Kabel 8 von einem Schaftteil 4a zum anderen Schaftteil 4b geführt wird.

Schließlich ist in Figur 5 eine Ausführung gezeigt, bei der die Schaftteile 4a, 4b ineinander gesteckt und mittels eines Sicherungsbolzens 21 gesichert sind.

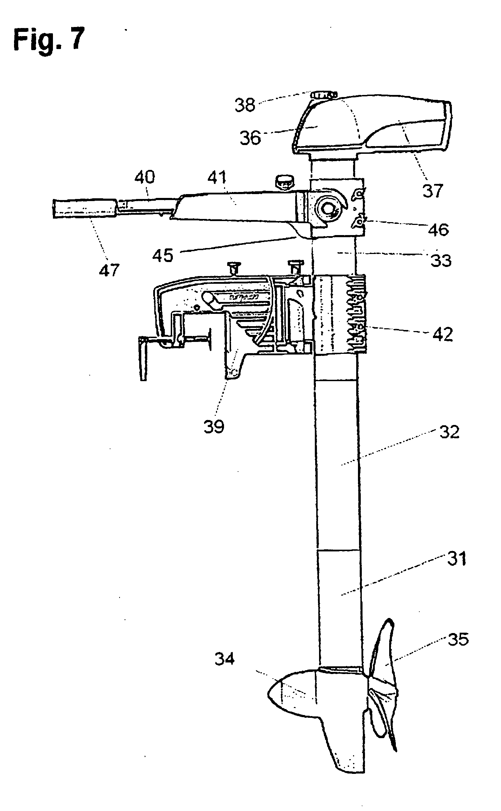

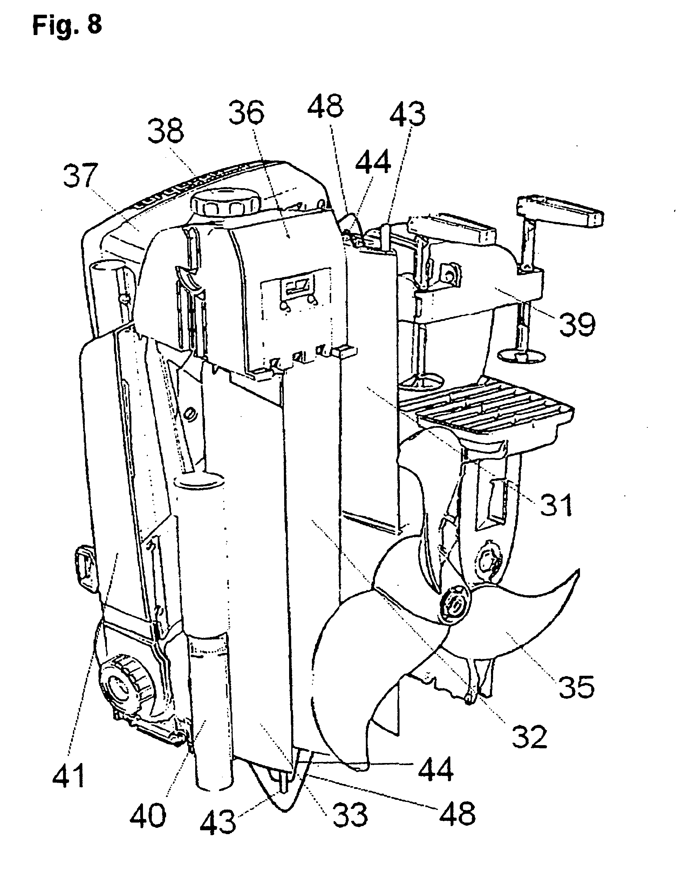

Die Figuren 7 und 8 zeigen eine bevorzugte Ausführungsform des erfindungsgemäßen Außenbordmotors zum einen in der Betriebskonfiguration, zum anderen in der Transportkonfiguration.

Der Außenbordmotor besitzt einen in drei Teile 31, 32, 33 zerlegbaren Schaft. Das unterste Schaftteil 31 ist fest mit dem Unterwasserteil 34 verbunden. In dem Unterwasserteil 34 befindet sich ein in der Zeichnung nicht dargestellter Elektromotor, der den Propeller 35 antreibt. Am obersten Schaftteil 33 ist eine Halterung 36 für den Batteriesatz 37 angebracht.

Im Inneren der Schaftteile 31, 32, 33 verläuft ein Kabel 44, welches den im Unterwasserteil 34 befindlichen Elektromotor mit einem Batterieanschluss in der Halterung 36 elektrisch leitend verbindet. Die Halterung 36 weist Kontakte auf, über die der Batteriesatz 37 beim Einsetzen in die Halterung 36 automatisch mit dem Kabel elektrisch leitend verbunden und so der Elektromotor an die Stromversorgung angeschlossen wird.

Ferner verläuft im Inneren des Schaftes 31, 32, 33 ein Zugseil 48. Das Zugseil 48 ist an dem untersten Schaftteil 31 fixiert, läuft durch die Schaftteile 31, 32, 33 und kann über den an der Halterung 36 angeordneten Drehknopf 38 gespannt werden, so dass die Schaftteile 31, 32, 33 in Längsrichtung des Schaftes 31, 32, 33 fest miteinander verbunden werden. Quer zur Schaftlängsachse werden die einzelnen Schaftteile 31, 32, 33 durch Stifte 43 (siehe Figur 8) gehalten, die beim Zusammenstecken der Schaftteile 31, 32, 33 in entsprechende Bohrungen des benachbarten Schaftteiles 31, 32, 33 greifen.

Der Außenbordmotor besitzt ferner eine Spiegelhalterung 39 zur Befestigung des Außenbordmotors am Boot sowie eine aus zwei ineinander gesteckten Teilen 40, 41 bestehende Pinne mit Pinnenhalterung. Die elektrische Verbindung von der Pinne 40, 41 zu dem Elektromotor oder einer Steuereinheit erfolgt mittels eines Steuerkabels 45, welches im Inneren der Schaftteile 31, 32, 33 verläuft und in Höhe der Pinne 40, 41 aus dem obersten Schaftteil 33 austritt. Das Steuerkabel 45 kann an eine entsprechende Buchse an der Pinne 41 angeschlossen werden.

Figur 8 zeigt den Außenbordmotor gemäß Figur 7 in der Transportkonfiguration. Der Außenbordmotor ist für den Transport auf ein äußerst kompaktes Maß zusammenpackbar und kann beispielsweise in einem Rucksack transportiert werden.

Zum Zerlegen des Außenbordmotors wird die Pinne von dem obersten Schaftteil 33 durch Lösen der Schraubverbindungen 46 getrennt. Das mit einem Drehgriff 47 zur Regelung der Motorleistung versehene erste Pinnenteil 40 wird von dem zweiten Pinnenteil 41 abgezogen. Die Spiegelhalterung 39 wird ebenfalls durch Öffnen der Schrauben 42 vom obersten Schaftteil 33 entfernt. Der Batteriesatz 37 ist während dem Betrieb in der Halterung 36 eingehängt. Zum Transport kann der Batteriesatz 37 durch Nach-oben-Klappen aus der Halterung 36 ausgehängt werden.

Die Schaftteile 31, 32, 33 werden durch Drehen am Drehknopf 38 und damit verbundenem Entspannen des Zugseils 48 voneinander gelöst. Der Drehknopf 38 wird soweit aufgedreht, dass die Schaftteile 31, 32, 33 auseinander gezogen werden können. In Figur 8 sind auch die Stifte 43 zu erkennen, die beim Zusammenstecken der Schaftteile 31, 32, 33 in die entsprechenden Bohrungen des benachbarten Schaftteiles 31, 32, 33 greifen.

Nach erfolgtem Entspannen des Zugseils 48 sind die Schaftteile 31, 32, 33 relativ zueinander frei bewegbar, jedoch noch über das Kabel 44 bzw. das lose Zugseil 48 miteinander verbunden, welche in deren Inneren verlaufen. Die Schaftteile 31, 32, 33 können in diesem Zustand kompakt nebeneinander angeordnet werden. Figur 8 zeigt die bevorzugte Anordnung der einzelnen Teile des Außenbordmotors: Von links nach rechts befinden sich nebeneinander die beiden Teile 40, 41 der Pinne, die Schaftteile 33, 32, 31 und die Spiegelhalterung 39. Der Batteriesatz 37 ist in der Zeichnung hinter den anderen Teilen 40, 41, 31, 32, 33, 39 des Außenbordmotors zu erkennen.

## Patentansprüche

1. Transportierbarer Außenbordmotor mit einem Oberteil (1), einem Unterwasserteil (2), einem das Oberteil (1) und das Unterwasserteil (2) verbindenden, aus mindestens zwei Schaftteilen (4a, 4b, 4c) bestehendem Schaft (4), einem Elektromotor und einem elektrischen Kabel (8), welches im Inneren des Schaftes (4) verläuft, wobei der Außenbordmotor in eine Betriebskonfiguration und in eine Transportkonfiguration bringbar ist, wobei in der Betriebskonfiguration das Oberteil (1), der Schaft (4) und das Unterwasserteil (2) fest miteinander verbunden sind, und wobei die relative Lage des elektrischen Kabels (8) zu dem Schaft (4) in der Betriebskonfiguration und in der Transportkonfiguration unterschiedlich ist, **dadurch gekennzeichnet, dass** die Schaftteile (4a, 4b, 4c) in der Transportkonfiguration voneinander getrennt sind.

2. Außenbordmotor nach Anspruch 1, **dadurch gekennzeichnet, dass** in der Transportkonfiguration zumindest ein Teil des Kabels relativ zu mindestens einem der Schaftteile (4a, 4b, 4c) frei bewegbar ist.

3. Außenbordmotor nach Anspruch 2, **dadurch gekennzeichnet, dass** in Transportkonfiguration der Schaft (4) oder zumindest ein Schaftteil (4a, 4b,4c) relativ zu dem Kabel (8) in Richtung seiner Längsachse frei bewegbar ist.

4. Außenbordmotor nach einem der Ansprüche 1 bis 3, **dadurch gekennzeichnet, dass** in der Transportkonfiguration alle Schaftteile (4a, 4b,4c) relativ zu dem Kabel (8) frei bewegbar sind.

5. Außenbordmotor nach einem der Ansprüche 1 bis 4, **dadurch gekennzeichnet, dass** die Schaftteile (4a, 4b,4c) in der Betriebskonfiguration zusammengesteckt sind.

6. Außenbordmotor nach einem der Ansprüche 1 bis 5, **dadurch gekennzeichnet, dass** im Inneren des Schaftes (4) oder im Inneren der Schaftteile (4a, 4b,4c) ein Zugseil (17) vorgesehen ist.

7. Außenbordmotor nach einem der Ansprüche 1 bis 6, **dadurch gekennzeichnet, dass** während des Wechsels zwischen der Betriebskonfiguration und der Transportkonfiguration eines der Schaftteile (4a, 4b,4c) in ein anderes Schaftteil (4a, 4b,4c) verschiebbar ist.

8. Außenbordmotor nach einem der Ansprüche 1 bis 7, **dadurch gekennzeichnet, dass** in der Transportkonfiguration das Kabel (8) mit dem Schaft (4) oder mit den Schaftteilen (4a, 4b,4c) um das Oberteil (1) wickelbar ist.

## Claims

1. Transportable outboard motor having an upper part (1), an underwater part (2), a shaft (4) which connects the upper part (1) and the underwater part (2) and comprises at least two shaft parts (4a, 4b, 4c), an electric motor and an electrical cable (8) which runs in the interior of the shaft (4), wherein the outboard motor can be configured in an operating configuration and in a transport configuration, wherein, in the operating configuration, the upper part (1), the shaft (4) and the underwater part (2) are firmly connected to one another, and wherein the relative position of the electrical cable (8) with respect to the shaft (4) is different in the operating configuration and in the transport configuration, **characterized in that** the shaft parts (4a, 4b, 4c) are separated from one another in the transport configuration.

2. Outboard motor according to Claim 1, **characterized in that**, in the transport configuration, at least one part of the cable can move freely relative to at least one of the shaft parts (4a, 4b, 4c).

3. Outboard motor according to Claim 2, **characterized in that**, in the transport configuration, the shaft (4) or at least one shaft part (4a, 4b, 4c) can move freely relative to the cable (8) in the direction of its longitudinal axis.

4. Outboard motor according to one of Claims 1 to 3, **characterized in that,** in the transport configuration, all the shaft parts (4a, 4b, 4c) can move freely relative to the cable (8).

5. Outboard motor according to one of Claims 1 to 4, **characterized in that,** in the operating configuration, the shaft parts (4a, 4b, 4c) are plugged together.

6. Outboard motor according to one of Claims 1 to 5, **characterized in that** a pulling cable (17) is provided in the interior of the shaft (4) or in the interior of the shaft parts (4a, 4b, 4c).

7. Outboard motor according to one of Claims 1 to 6, **characterized in that** one of the shaft parts (4a, 4b, 4c) can be moved into another shaft part (4a, 4b, 4c) while changing between the operating configuration and the transport configuration.

8. Outboard motor according to one of Claims 1 to 7, **characterized in that,** in the transport configuration, the cable (8) with the shaft (4) or with the shaft parts (4a, 4b, 4c) can be wound around the upper part (1).

## Revendications

1. Moteur hors-bord transportable doté d'une partie supérieure (1), d'une partie immergée (2), d'une tige (4) reliant la partie supérieure (1) et la partie immergée (2) et composée d'au moins deux parties de tige (4a, 4b, 4c), d'un moteur électrique et d'un câble électrique (8) circulant à l'intérieur de la tige (4), le moteur hors-bord pouvant être placé dans une configuration de fonctionnement et dans une configuration de transport, sachant que dans la configuration de fonctionnement, la partie supérieure (1), la tige (4) et la partie immergée (2) sont reliées fixement entre elles et que la position relative du câble électrique (8) par rapport à la tige (4) est différente dans la configuration de fonctionnement et dans la configuration de transport, **caractérisé en ce que** les parties de tige (4a, 4b, 4c) sont séparées l'une de l'autre dans la configuration de transport.

2. Moteur hors-bord selon la revendication 1,
**caractérisé en ce que** dans la configuration de transport, au moins une partie du câble peut être déplacée librement par rapport à au moins une des parties de tige (4a, 4b, 4c).

3. Moteur hors-bord selon la revendication 2,
**caractérisé en ce que** dans la configuration de transport, la tige (4) ou au moins une partie de tige (4a, 4b, 4c) peut être déplacée librement par rapport au câble (8) dans la direction de son axe longitudinal.

4. Moteur hors-bord selon l'une quelconque des revendications 1 à 3, **caractérisé en ce que** dans la configuration de transport, toutes les parties de tige (4a, 4b, 4c) peuvent être déplacées librement par rapport au câble (8).

5. Moteur hors-bord selon l'une quelconque des revendications 1 à 4, **caractérisé en ce que** les parties de tige (4a, 4b, 4c) sont assemblées dans la configuration de fonctionnement.

6. Moteur hors-bord selon l'une quelconque des revendications 1 à 5, **caractérisé en ce qu'**un câble tracteur (17) est prévu à l'intérieur de la tige (4) ou à l'intérieur des parties de tige (4a, 4b, 4c).

7. Moteur hors-bord selon l'une quelconque des revendications 1 à 6, **caractérisé en ce que** lors du changement entre la configuration de fonctionnement et la configuration de transport, une des parties de tige (4a, 4b, 4c) peut être coulissée dans une autre partie de tige (4a, 4b, 4c).

8. Moteur hors-bord selon l'une quelconque des revendications 1 à 7, **caractérisé en ce que** dans la configuration de transport, le câble (8) peut être enroulé autour de la partie supérieure (1) avec la tige (4) ou avec les parties de tige (4a, 4b, 4c).
